# EUROPÄISCHE PATENTSCHRIFT

(11) **EP 2 574 390 B1**
(45) Veröffentlichungstag und Bekanntmachung des Hinweises auf die Patenterteilung: **07.01.2015**
(21) Anmeldenummer: 12196545.3
(22) Anmeldetag: 26.02.2009
(51) Int. Cl.: B01D 46/00, B01D 46/24, B01D 46/52

(54) **Verfahren zur Herstellung eines ovalen Filterbalges**
Method for producing an oval filter element
Procédé de fabrication d'un élément de filtre ovale

(30) Priorität: 26.02.2008 DE 102008011186; 23.12.2008 DE 102008062954; 23.12.2008 DE 102008062953; 23.12.2008 DE 102008062956; 23.12.2008 DE 102008062955
(43) Veröffentlichungstag der Anmeldung: 03.04.2013
(62) Teilanmeldung aus: 09715896.8
(73) Patentinhaber: MANN + HUMMEL GMBH, 71638 Ludwigsburg (DE)
(72) Erfinder: MÜNKEL, Karlheinz, 75038 Oberderdingen-Flehingen (DE); KOLCZYK, Markus, 74395 Mundelsheim (DE); BECKER, Stefan, 68305 Mannheim (DE); HEIM, Dr. Michael, 71691 Freiberg a.N. (DE)

(56) Entgegenhaltungen:
- US-A1- 2007 157 589
- US-A1- 2007 209 343

## Beschreibung

### Technisches Gebiet

Die vorliegende Erfindung betrifft ein Verfahren zur Herstellung eines Faltenbalges und die Verwendung des Verfahrens zur Herstellung eines Filterelements.

### Stand der Technik

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Die für Brennkraftmaschinen benötigte Verbrennungsluft wird in der Regel vor dem Zuführen in dem Verbrennungsraum gereinigt, um die Leistungsfähigkeit und die Lebensdauer der Brennkraftmaschine zu erhöhen. Dabei wird für die Reinigung der Verbrennungsluft in der Regel eine Luftfilteranordnung verwendet. Dies ist insbesondere für Brennkraftmaschinen von Bedeutung, die einer Umgebung arbeiten, die einer besonderen Verschmutzungsbelastung der Umgebungsluft ausgesetzt sind, sowie beispielsweise im Bereich des Baugewerbes bzw. der Landwirtschaft. Insbesondere im Bereich des Baugewerbes bzw. in der Landwirtschaft tritt mitunter eine sehr hohe Staubbelastung auf, die eine Reinigung der Verbrennungsluft notwendig macht. Aufgrund der Tatsache, dass das Spektrum der Staubpartikelgröße im Regelfall vorher nicht bekannt ist, muss eine Luftfilteranordnung so ausgestaltet sein, dass sämtliche Partikelgrößen, die den Betrieb der Brennkraftmaschine in irgendeiner Weise beeinflussen können, zuverlässig herausgefiltert werden können, um eine Zuführung hinreichend sauberer Verbrennungsluft zu der Brennkraftmaschine zu ermöglichen.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst ein Filterelement, welches als auswechselbare Filterpatrone ausgebildet ist, die axial von der Verbrennungsluft durchströmt wird und radial über einen verschließbaren Deckel in das Luftfiltergehäuse einsetzbar ist. Der Filterpatrone ist ein Zyklon-Vorabscheider vorgeschaltet, der zur Abscheidung von groben Staubpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsenrichtung durchströmt.

Eine Möglichkeit das Hauptfilterelement auszugestalten ist die Ausgestaltung in Form eines Faltenbalgfilters. Dabei kann beispielsweise ein Faltenbalg aus einem sternförmig gefalteten Filterelement bestehen, dessen Filterfalten in radialer Richtung verlaufen, wobei sich die Stirnkanten der Filterfalten im Wesentlichen in einer Axialrichtung erstrecken. Ein derartiger Filterfaltenbalg ist beispielsweise bekannt aus WO 2008/067030, bei der das Filterelement aus einem gefalteten Filterbalg besteht, wobei die Stirnkanten der Filterfalten sich in einer Axialrichtung erstrecken, die mit einer Durchströmungsrichtung korrespondiert, während sich die Filterfalten in eine der zu querverlaufenden Richtung erstrecken. Dieser Faltenbalg besteht aus einem Mehrfachbalg, der auf einem begrenzten axialen Abschnitt bzw. einem Abschnitt in Strömungsrichtung eine erhöhte Filterfläche bereitstellt, um auf diese Weise die Filterkapazität zu erhöhen.

Ferner ist aus der US 2007/157589 ein Filterelement mit Fattentiefen bekannt, welche sich entlang einer Erstreckungsrichtung ändern.

Aus der US 2007/209343 ist ferner ein Filterelement mit zueinander V-förmig angeordneten, flachen Filterbälgen bekannt, bei welchen jede Falte zwei Faltenschenkel mit verschiedenen Längen aufweist.

### Offenbarung der Erfindung

Vor dem Hintergrund des Standes der Technik kann es als eine Aufgabe der vorliegenden Erfindung betrachtet werden, ein Verfahren zur Herstellung eines Faltenbalges für ein Filterelement für einen Luftfilter bereitzustellen, das eine verbesserte Effizienz aufweist.

Die Aufgabe der vorliegenden Erfindung wird gelöst durch den Gegenstand der unabhängigen Ansprüche, wobei Weiterbildungen in den abhängigen Ansprüchen verkörpert sind.

Gemäß der Erfindung wird ein Verfahren zur Herstellung eines ovalen Faltenbalges bereitgestellt, wobei das Verfahren die Schritte aufweist: Falten einer sich in Längsrichtung erstreckenden Bahn eines Filtermaterials zu Filterfalten, wobei das Falten im Wesentlichen quer zu der Längsrichtung erfolgt und die Filterfalten abwechselnde Knickrichtungen aufweisen, derart, dass eine Mehrzahl von querverlaufenden Filterfalten mit Faltenkanten auf einer ersten Seite und eine Mehrzahl von querverlaufenden Filterfalten mit Faltenkanten auf einer zweiten Seite entstehen; Fixieren der Faltenkanten der ersten Seite in einem regelmäßigen Abstand zueinander; Umbiegen der Bahn um eine quer zur Längsrichtung verlaufende Achse einer axialen Ausdehnungsrichtung derart, dass die fixierten Faltenkanten radial nach außen gerichtet liegen; Verbinden von zwei gegenüberliegenden und quer zur Längsrichtung verlaufenden Faltenkanten derart, dass in einer im Wesentlichen orthogonal zur axialen Längsrichtung verlaufenden Ebene einer radialen Erstreckungsrichtung eine ovale Umfangskontur des Faltenbalges entsteht.

Auf diese Weise kann die Mehrzahl von später radial nach außen liegenden Faltenkanten in einem gleichen Abstand zueinander fixiert werden, bevor der Faltenbalg in seine ovale Umfangsgeometrie verbracht wird. Durch eine entsprechende Fixierung der Faltenkanten zueinander können sich die Abstände der Faltenkanten zueinander im Wesentlichen nicht mehr verändern, wenn der Faltenbalg zu einer ovalen Umfangsgeometrie gebogen wird.

Das erfindungsgemäße Verfahren kann weiter erfindungsgemäß verwendet werden zur Herstellung eines Filterelements für einen Luftfilter einer Brennkraftmaschine, wobei das Filterelement einen ersten ovalen Filterbalg mit einer Mehrzahl von im Wesentlichen in einer axialen Ausdehnungsrichtung des Filterelements verlaufenden Filterfalten mit einem jeweils an einer Faltenkante zusammenlaufenden ersten Faltenschenkel und zweiten Faltenschenkel aufweist, wobei der erste Filterbalg in einer zu der axialen Ausdehnungsrichtung orthogonal verlaufenden Ebene einer radialen Ausdehnungsrichtung einen ersten Abschnitt mit einer ersten Krümmung und einen benachbarten zweiten Abschnitt mit einer zweiten Krümmung aufweist, wobei die zweite Krümmung geringer ist als die erste Krümmung, wobei im zweiten Abschnitt die Neigung der Filterfalten zu einer Lotrechten bezogen auf den Verlauf des zweiten Abschnitts zumindest teilabschnittsweise in Richtung eines benachbarten ersten Abschnittes zunimmt.

Auf diese Weise kann die Öffnung der Filterfalten, und damit der Abstand der Faltenkanten, die radial nach außen gerichtet sind, gleichmäßiger ausgestaltet werden, sodass bei einer Anströmung des Filterelements eine gleichmäßigere Belastung der Filterflächen und Filterfalten auch bei unterschiedlichen Krümmungen der Filterbalgabschnitte erreicht werden kann. Derartige unterschiedliche Krümmungen können beispielsweise dadurch zustande kommen, dass der Filterbalg nicht kreisrund sondern oval ausgestaltet ist, um eine optimierte Einbaugeometrie zu erreichen. Bei einer ovalen Ausgestaltung eines Filterbalges führen jedoch die unterschiedlichen Bereiche mit unterschiedlichen Krümmungen auch zu unterschiedlichen Abständen der radial nach außen zeigenden Filterkanten. Insbesondere wenn ein Filterbalg in Form eines langestreckten Ovals ausgestaltet ist, liegen die Faltenkanten im Bereich der Langachse im Wesentlichen eng beieinander, während die Filterkanten im Bereich der starken Krümmungen weit auseinandergezogen sind und somit im Verhältnis zu den Faltenkanten der Langachsen eine sehr große Öffnungsbreite aufweisen. Diese führt jedoch bei einer Anströmung dazu, dass im Bereich der starken Krümmungen eine große Öffnung der Falten vorhanden ist, was zu einer erhöhten Anströmung und damit Partikelbelastung führt, während die Bereiche der Langachsen mit eng beieinander liegenden Faltenkanten in einem geringeren Maß angeströmt werden und somit einer geringeren Partikelbelastung unterliegen. Durch die Ausgestaltung der Filterfalten mit einer Neigung, die zu einer Lotrechten bezogen auf den Verlauf des zweiten Abschnittes zumindest teilabschnittsweise in Richtung des benachbarten ersten Abschnittes zunimmt, kann die Öffnung der Filterfalten in beispielsweise einem Bereich einer geringeren Krümmung weiter geöffnet werden und somit einer erhöhten Anströmung unterzogen werden, während in Bereichen einer starken Krümmung des Filterbalges die Faltenkanten enger aneinander rücken und somit weiter geschlossen sind, sodass sich in diesem Bereich die ehemals starke Anströmung verringert. Auf diese Weise kann die Anströmung und damit die Partikelbelastung in Bereichen einer geringen Krümmung erhöht und in Bereichen einer hohen Krümmung verringert werden, sodass eine Egalisierung der Partikelbelastung auftritt. Dies führt schließlich zu einer erhöhten Effizienz eines Filterbalges und zu einer gleichmäßigeren Belastung der Filterflächen.

Gemäß einer Ausführungsform der Erfindung nimmt im ersten Abschnitt die Neigung der Filterfalten zu einer Lotrechten bezogen auf den Verlauf des ersten Abschnitts zumindest teilabschnittsweise in Richtung des benachbarten zweiten Abschnitts ab.

Somit vergrößert sich nicht nur im Bereich der kleineren Krümmung der Abstand der Faltenkanten, sondern es verringert sich im Bereich der großen Krümmung auch der Abstand der Faltenkanten, sodass an dieser Stelle eine Egalisierung der Abstände der Faltenkanten zwischen den Bereichen einer starken Krümmung und den Bereichen einer schwachen Krümmung erreicht werden kann.

Gemäß einer Ausführungsform der Erfindung weist der erste Filterbalg ferner einen dritten Abschnitt mit einer dritten Krümmung und einen vierten Abschnitt mit einer vierten Krümmung auf, wobei der zweite Abschnitt und der vierte Abschnitt jeweils derart zwischen dem ersten Abschnitt und dem dritten Abschnitt angeordnet sind, dass der erste Abschnitt, der zweite Abschnitt, der dritte Abschnitt und der vierte Abschnitt eine geschlossene ovale Umfangskontur darstellen.

Auf diese Weise kann ein ovales Filterelement bzw. ein Filterelement mit einem ovalen Filterbalg bereitgestellt werden. Die Faltenkanten können dabei die Richtung der axialen Erstreckungsrichtung verlaufen, jedoch auch zu dieser geneigt sein, sodass sich dabei ein konischer Filterbalg bildet. Eine oval geschlossene Umfangskontur eines Filterbalges ermöglicht dabei eine einfache Dichtungskonfiguration, sodass keine scharfen Umfangskanten abgedichtet werden müssen, was insbesondere eine einfache Handhabung einer radial nach außen bzw. nach innen wirkenden Dichtungskonfiguration erlaubt.

Gemäß einer Ausführungsform der Erfindung weist der zweite Abschnitt und der vierte Abschnitt eine im Wesentlichen übereinstimmende Krümmung auf.

Gemäß einer Ausführungsform der Erfindung weist der erste Abschnitt und der dritte Abschnitt eine im Wesentlichen übereinstimmende Krümmung auf.

Auf diese Weise kann ein im Wesentlichen symmetrisches Filterelement bereitgestellt werden, das eine derartige Symmetrie aufweist, das es unproblematisch in ein entsprechendes Filtergehäuse eingesetzt werden kann, ohne das zu befürchten ist, dass eine fehlerhafte Einbauposition gewählt wird. Es sei an dieser Stelle jedoch angemerkt, dass insbesondere bei einer unterschiedlich ausgelegten Krümmung des ersten Abschnittes und des dritten Abschnittes eine Umfangskontur für einen Filterbalg bzw. ein Filterelement bereitgestellt werden kann, die eine gewisse Einbauorientierung vorgibt, sodass eine Verdrehsicherung bereitgestellt werden kann. Eine derartige Verdrehsicherung ist insbesondere für derartige Fälle von Bedeutung, in denen das Filterelement bezüglich seiner An- bzw. Abströmung auf die Einbauorientierung hin ausgelegt ist, insbesondere wenn die Zuführung bzw. die Abführung der Zu- bzw. Abluft in das Luftfiltergehäuse nicht zentral sondern unsymmetrisch erfolgt.

Gemäß einer Ausführungsform der Erfindung ist eine Fläche des ersten Faltenschenkels und eine Fläche des benachbarten zweiten Faltenschenkels bezüglich einer radial außen liegenden Faltenkante im Wesentlichen parallel.

Derartige Filterfalten mit jeweils parallel zueinander liegenden Faltenschenkeln können verhältnismäßig einfach geneigt angestellt werden, insbesondere da bei einer Neigung der Falten die Länge des ersten Faltenschenkels und die Länge des zweiten Faltenschenkels in radialer Richtung im Wesentlichen gleich sind, sodass sich eine vereinfachte Vorfaltung des Filtermediums im Herstellungsprozess ergibt. Es sei jedoch angemerkt, dass der erste Faltenschenkel und der zweite Faltenschenkel zueinander geneigt sein können, sodass eine Neigung der Filterfalten zu unterschiedlichen Längen des ersten Faltenschenkels und des zweiten Faltenschenkels führen kann, was jedoch bei einer Vorfaltung der Filterfalten berücksichtig werden kann, um auf diese Weise die gewünschte Umfangskontur eines Faltenbalges zu erreichen.

Gemäß einer Ausführungsform der Erfindung weist das Filterelement ein Stützgerüst auf, mit entlang eines in radialer Ausdehnungsrichtung ovalen Umfangs Ausnehmung zur Aufnahme der Faltenkanten aufweist. Diese Ausnehmungen können regelmäßig sein, jedoch auch definiert in Abhängigkeit eines erwarteten Strömungsfeldes und einer daraus resultierenden Partikelbelastung angeordnet sein, insbesondere, wenn eine unsymmetrische oder exzentrische Anströmung erfolgt.

Auf diese Weise können die Faltenkanten bzw. die Faltenschenkel in dem Stützgerüst abgestützt werden und somit ein Kollabieren der Filterfalten bei einer starken Anströmung verhindert werden. Darüberhinaus kann das Stützgerüst den egalisierten Abstand der Filterfalten in den unterschiedlichen Krümmungbereichen des Faltenbalges aufrechterhalten bzw. vorgeben, sodass eine gleichmäßigere Partikelbelastung der unterschiedlichen Filterfalten erreicht werden kann.

Gemäß einer Ausführungsform der Erfindung weist das Filterelement eine Leimfadenraupe zur Stabilisierung des Abstandes auf.

Eine Leimfadenraupe kann dabei die radial nach innen gerichteten Filterkanten zueinander positionieren, ebenso wie die radial nach außen gerichteten Filterkanten. Während die radial nach innen gerichteten Filterkanten oftmals durch die geringere Umfangslänge keine besonderen Stabilisierung bezüglich des Abstandes benötigen, kann mit einer Leimfadenraupe zur Stabilisierung der radial nach außen gerichteten Filterkanten eine egalisierte Abstandsgeometrie der radial nach außen gerichteten Kanten erreicht werden. Die Leimfadenraupe kann dabei sowohl vor dem Verbringen in eine gewünschte Umfangskontur aufgebracht werden als auch nach Verbringen in eine gewünschte Umfangskontur. Insbesondere kann eine Leimfadenraupe oder eine andere äquivalente Verklebung oder Fixierung aufgebracht werden, wenn sich ein entsprechender Faltenbalg in einer kreisrunden Umfangskontur befindet, in der naturgemäß der Abstand der radial nach außen gerichteten Faltenkanten konstant ist, um anschließend bei einer erfolgten Fixierung der Leimfadenraupe das Filterelement zu einer ovalen Umfangskontur zusammenzudrücken, wobei sich dann durch die Leimfadenraupe oder eine entsprechende äquivalente Fixierung ein egalisierter Abstand der Faltenkanten einstellt.

Gemäß einer Ausführungsform der Erfindung liegt die Leimfadenraupe an einer äußeren Mantelfläche auf nach außen gerichteten Faltenkanten haftend auf.

Insbesondere bei einer Mehrzahl von Leimfadenraupen entlang der Streckung der Faltenkanten kann somit eine Aufrechterhaltung der egalisierten Abstände der Filterfalten zueinander über die gesamte Erstreckungsrichtung der Filterfalten erreicht werden.

Gemäß einer Ausführungsform der Erfindung liegt die Leimfadenraupe auf einer in die axiale Ausdehnungsrichtung gerichteten Stirnkante der Filterfalten haftend auf.

Bei einer Anordnung der Leimfadenraupe auf einer Stirnkante kann insbesondere die bei einer axialen Anströmung einer starken Strömungsbelastung unterworfene exponierte Faltenkante stabilisiert werden. Ferner kann ein entsprechender radialer Bereich, der für eine Anströmung relevant ist freigehalten werden, wenn eine entsprechende Leimraupe insbesondere im Bereich der Anströmung auf einer Stirnkante anstelle einer radial nach außen gerichteten Mantelfläche angeordnet ist.

Gemäß einer Ausführungsform der Erfindung ist an einem ersten axialen Ende des ersten Filterbalges ein erstes Dichtungselement vorgesehen zur Fehlluftdichtungstrennung einer Reingasseite und einer Rohgasseite, wobei das Dichtungselement ausgelegt ist zum Halten des Abstandes der Filterfalten.

Auf diese Weise kann das Dichtungselement teilweise oder ganz die Aufgabe der Leimfadenraupe übernehmen und sowohl die beabstandete Positionierung der Filterfalten übernehmen als auch eine entsprechende Abdichtung der Rohgasseite zu der Reingasseite. Darüberhinaus kann je nach Erstreckung des Dichtungselements das Dichtungselement auch als ein äußerer Stoßschutz fungieren, sodass eine unbeabsichtigte Verformung insbesondere im Bereich der exponierten Kanten und Ecken des Filterelements vermieden werden kann.

Gemäß einer Ausführungsform der Erfindung sind die Filterfalten wenigstens teilweise mit einer erhabenen Prägung versehen, die ausgelegt ist um benachbarte Filterfalten beabstandet zu halten.

Auf diese Weise kann erreicht werden, dass die benachbarten Faltenschenkel nicht flächig aufeinander aufliegen, was zu einem Kollabieren der Filterfalten führen würde, was unweigerlich mit einer Reduzierung der Filterleistung einhergeht. Insbesondere können die Anströmflächen durch eine erhabene Prägung auf den Filterfalten und dort insbesondere auf den entsprechenden Faltenschenkeln offen gehalten werden.

Gemäß einer Ausführungsform der Erfindung nimmt die Höhe der Prägung radial nach außen hin zu.

Auf diese Weise kann erreicht werden, dass der Abstand der Filterfalten radial nach außen größer gehalten wird als radial nach innen, da naturgemäß eine radial innen liegende Umfangskontur eine geringere Umfangslänge aufweist als eine radial außen liegende Umfangskontur. Durch eine radial nach außen zunehmende Höhe der Prägung kann somit auch eine Zunahme der Neigung der Filterfalten von einem weniger gekrümmten Bereich in Richtung zu einem stärker gekrümmten Reich hervorgerufen werden, sodass unter gewissen Umständen auf eine weitere Fixierung zur Egalisierung der Faltenabstände verzichtet werden kann.

Gemäß einer Ausführungsform der Erfindung ist die Höhe der Prägung am radial nach außen gerichteten Ende der Prägung in dem zweiten Abschnitt höher als der Abstand der Falten an einem radial nach innen gerichteten Ende der Filterfalten.

Dies unterstützt insbesondere die Zunahme der Neigung der Filterfalten von einem zweiten Abschnitt einer geringeren Krümmung hin zu einem ersten Abschnitt mit einer höheren Krümmung.

Gemäß einer Ausführungsform der Erfindung ist bei wenigstens einem Teil der Filterfalten des zweiten Abschnittes der erste Faltenschenkel bezüglich einer radial außen liegenden Faltenkante jeweils in einer Richtung zu einem benachbarten Abschnitt mit einer größeren Krümmung angeordnet, wobei der zweite Faltenschenkel länger ausgestaltet ist als der erste Faltenschenkel.

Auf diese Weise kann bereits bei einem Vorfalzen der Filterfalten eine entsprechende Vorformung des Faltenbalges forciert werden, sodass sich bei einem Zusammenfügen und einem Verbringen in eine ovale äußere Umfangskontur automatisch eine Neigung der Filterfalten derart einstellt, dass eine egalisierte Abstandsgeometrie der Filterfalten entlang des äußeren Umfangs des Faltenbalges erreicht werden kann.

Gemäß einer Ausführungsform der Erfindung weist das Filterelement einen zweiten Filterbalg auf mit im Wesentlichen in einer axialen Ausdehnungsrichtung des Filterelementes verlaufenden Filterfalten und einer im Wesentlichen in einer dazu orthogonal verlaufenden Ebene in radialler Ausdehnungsrichtung verlaufenden zweiten Faltentiefe, wobei der zweite Filterbalg radial innen zu dem ersten Filterbalg angeordnet ist.

Auf diese Weise kann ein Filterelement mit einer höheren Filterkapazität bzw. einem geringeren Strömungswiderstand bereitgestellt werden. Die ineinander gestellte Anordnung der Faltenbälge erlaubt im Wesentlichen eine kompaktere Bauform.

Gemäß einer Ausführungsform der Erfindung sind die Filterfalten des zweiten Filterbalgs gegenüber den Filterfalten des ersten Filterbalgs einer axialen Ausdehnungsrichtung wenigstens abschnittsweise geneigt.

Auf diese Weise ergeben sich An- bzw. Abströmkanäle, die konisch zulaufen, sodass dem über die Abströmkanaltiefe zunehmenden Einströmen des gefilterten Fluides bzw. dem über die Anströmkanaltiefe abnehmenden Fluidstrom, der durch das Filtermedium hindurchtritt, Rechnung getragen werden kann.

Gemäß einer Ausführungsform der Erfindung ist der erste Filterbalg an einem ersten axialen Ende mit einer bezüglich einer Außenkante des ersten Filterbalges formwahrenden Schale versehen.

Gemäß einer Ausführungsform der Erfindung läuft der im Wesentlichen erste gerade Abschnitt und der im Wesentlichen zweite gerade Abschnitt in der Ebene der radialen Ausdehnungsrichtung aufeinander zu.

Gemäß einer Ausführungsform der Erfindung ist an einem ersten axialen Ende des zweiten Filterbalges der erste gerade Abschnitt mit dem zweiten geraden Abschnitt derart mit einem ersten Dichtungselement miteinander verbunden, dass eine Reingasseite und eine Rohgasseite des zweiten Filterbalges fehlluftdicht voneinander getrennt sind.

Gemäß einer Ausführungsform der Erfindung erstreckt sich das erste Dichtungselement in einer Ebene der radialen Ausdehnungsrichtung nur teilweise über die Tiefe der zweiten Filterfalten des zweiten Filterbalges.

Gemäß einer Ausführungsform der Erfindung sind der erste Filterbalg und der zweite Filterbalg an jeweils einem zweiten axialen Ende derart mit einem zweiten Dichtungselement miteinander verbunden, dass jeweils die Reingasseiten und die Rohgasseiten des ersten Filterbalges bzw. des zweiten Filterbalges fehlluftdicht voneinander getrennt sind.

Gemäß einer Ausführungsform der Erfindung erstreckt sich das zweite Dichtungselement in einer Ebene der radialen Ausdehnungsrichtung nur teilweise über die Tiefe der ersten Filterfalten und der zweiten Filterfalten.

Gemäß einer Ausführungsform der Erfindung weist das Dichtungselement einen PUR-Schaum auf.

Es sei verstanden, dass auch eine Kombination der zuvor beschriebenen Merkmale möglich ist, wodurch sich ein Teil einer synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert:

### Kurze Beschreibung der Zeichnungen

Figur 1 zeigt eine schematische Ansicht eines Luftfilters mit einem Filtereinsatz und einem Deckel gemäß einer Ausführungsform der Erfindung.
Figur 2 zeigt eine perspektivische Schnittansicht eines Filterelements gemäß einer Ausführungsform der Erfindung.
Figur 3 zeigt eine schematische Ansicht einer Filterfaltenanordnung gemäß einer Ausführungsform der Erfindung in einem horizontalen Schnitt.
Figur 4 zeigte eine schematische Ansicht einer Filterfaltenanordnung gemäß einer Ausführungsform der Erfindung in einem horizontalen Schnitt mit parallelen Faltenschenkeln.
Figur 5 zeigt eine Detailansicht von Filterfalten aus Figur 4 gemäß einer Ausführungsform der Erfindung.
Figur 6 zeigt ein Stützgerüst für eine Filterfaltenanordnung gemäß einer Ausführungsform der Erfindung.
Figur 7 zeigt eine weitere Ausführungsform einer Stützgerüstanordnung für eine Filterfaltenanordnung.
Figur 8 zeigt eine weitere Ausführungsform einer Stützgerüstanordnung für eine Filterfaltenanordnung.
Figur 9 zeigt eine schematische Ansicht einer Leimraupenanordnung auf dem Element gemäß einer Ausführungsform der Erfindung.
Figur 10 zeigt eine schematische Ansicht einer Leimraupe auf einer Stirnseite eines Faltenbalges gemäß einer Ausführungsform der Erfindung.
Figur 11 zeigt eine schematische Anordnung eines Stützgerüstes für eine Filterfaltenanordnung gemäß einer Ausführungsform der Erfindung.
Figur 12 zeigt eine schematische Anordnung einer Prägung auf einem Filtermedium gemäß einer Ausführungsform der Erfindung.
Figur 13 zeigt eine Prägungsanordnung auf einem Filtermedium in einer Aufsicht gemäß einer Ausführungsform der Erfindung.
Figur 14 zeigt eine perspektivische Ansicht einer Prägungsanordnung auf einer Filterfalte gemäß einer Ausführungsform der Erfindung.
Figur 15 zeigt eine Schnittansicht mehrerer übereinanderliegender Filtermedienschichten mit einer Prägung gemäß einer Ausführungsform der Erfindung.
Figur 16 zeigt eine Detailansicht einer Filterfaltenanordnung mit einer sich radial nach außen hin erhöhenden Prägung gemäß einer Ausführungsform der Erfindung.
Figur 17 zeigt eine schematische Ansicht einer sogenannten S-Prägung.
Figur 18 zeigt eines sich einstellenden Profils eines Filtermediums bei einer S-Prägung gemäß einer Ausführungsform der Erfindung.
Figur 19 zeigt eine sogenannte Diamantprägung gemäß einer Ausführungsform der Erfindung.
Figur 20 zeigt einen ersten Schritt eines Verfahrens zum Herstellen eines Filterbalges gemäß einer Ausführungsform der Erfindung.
Figur 21 zeigt einen weiteren Schritt zur Herstellung eines Faltenbalges gemäß einer Ausführungsform der Erfindung.
Figur 22 zeigt einen weiteren Schritt eines Herstellungsverfahrens zum Herstellen eines Filterbalges gemäß einer Ausführungsform der Erfindung.
Die folgenden beschriebenen Ausführungsformen sind keinesfalls beschränkend aufzufassen und zeigen zweckmäßig, jedoch nicht ausschließliche Ausführungsformen der vorliegenden Erfindung.

### Beschreibung beispielhafter Ausführungsformen der Erfindung

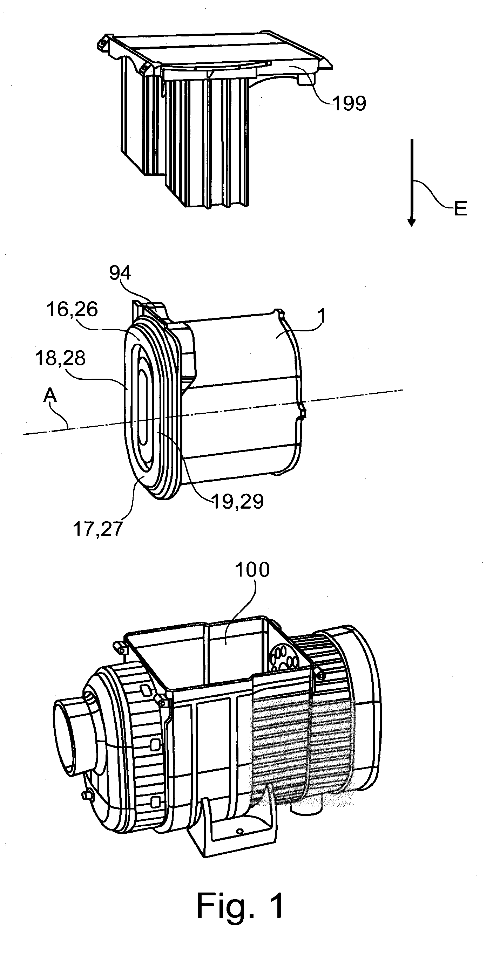

Figur 1 zeigt eine schematische Darstellung eines Luftfiltergehäuses 100 mit einem darin einzusetzenden Filterelement 1 sowie einem Verschluss bzw. Haltedeckel 199. Das Luftfiltergehäuse 100 kann dabei neben dem Filterelement 1, das hier als Hauptfilterelement ausgestaltet ist, weiterhin ein Vorfilterelement sowie ein Sicherheitsfilterelement aufweisen bzw. aufnehmen. In der hier gezeigten Ausführungsform wird das Filterelement 1 in einer Richtung orthogonal zur Durchströmungsrichtung in das Luftfiltergehäuse eingebracht. Mit Hilfe einer entsprechenden Geometrie an dem Verschlusselement 199 kann das in das Luftfiltergehäuse 100 eingebrachte Filterelement beispielsweise dichtend an eine entsprechende Dichtfläche im Luftfiltergehäuse 1 angedrückt werden. Die Kraftbeaufschlagung kann dabei in einer im Wesentlichen axialen Richtung korrespondierend mit der Durchströmungsrichtung erfolgen. Darüberhinaus sind jedoch auch Ausführungsformen denkbar, bei denen das Luftfilterelement 1 eine Dichtungskonfiguration aufweist, die eine im Wesentlichen radiale Kraftbeaufschlagung erfordert, sodass durch das Verschlusselement 199 nicht zwingend ein Anpressdruck in axialer Richtung erfolgen muss. Das Verschlusselement 199 kann jedoch ebenfalls eine entsprechende dichtende Anlagefläche für das Filterelement 1 aufweisen. Ferner weist das Verschlusselement 199 zweckmäßigerweise eine Dichtungskonfiguration auf, mit der das Luftfiltergehäuse 100 dichtend verschlossen werden kann. Das Filterelement 1 kann dabei, wie in Figur 1 gezeigt, einen Griff 94 aufweisen, mit dem das Filterelement sowohl in das Luftfiltergehäuse 100 eingebracht werden als auch aus diesem entnommen werden kann. Derartige Griffe 94 sind zweckmäßigerweise so ausgestaltet, dass sie auch mühelos gefunden werden können, auch wenn kein Blickkontakt zwischen einer Bedienperson und dem Filterelement 1 vorhanden ist bzw. die Bedienperson evtl. auch Schutzhandschuhe trägt. Das in Figur 1 gezeigte Filterelement weist einen ersten Abschnitt 16, einen zweiten Abschnitt 18, einen dritten Abschnitt 17 und einen vierten Abschnitt 19 auf, die zusammen in der hier gezeigten Ausführungsform eine Umfangsgeometrie des Filterelements darstellen. Das in Figur 1 gezeigte Filterelement erstreckt sich dabei in eine axiale Richtung A, die orthogonal zu der Ebene verläuft, in der sich die Umfangsgeometrie erstreckt. Das Filterelement 1 kann dabei entlang der Einführungsrichtung E in das Luftfiltergehäuse 100 eingeführt werden, bevor das Luftfiltergehäuse 100 mit dem Deckel 199 verschlossen wird.

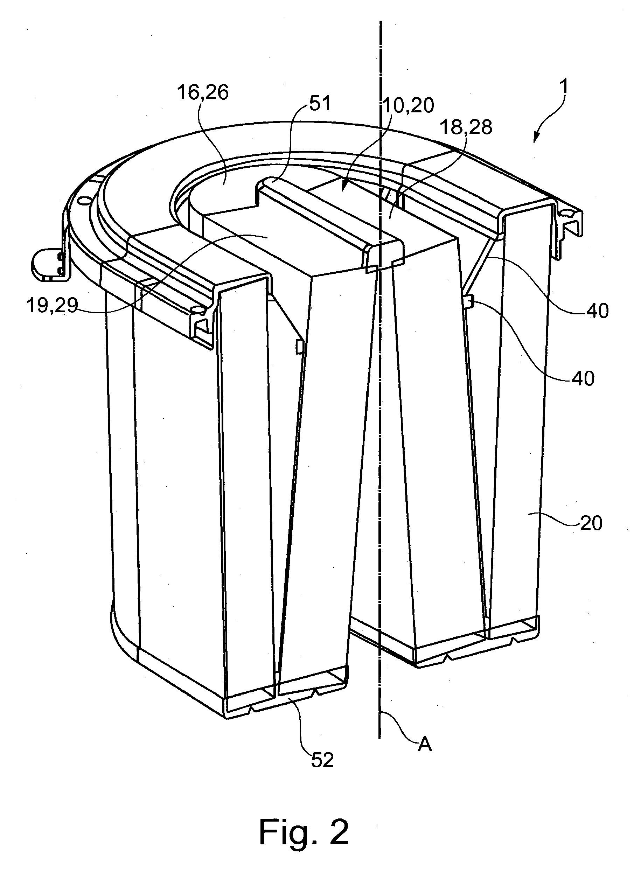

Figur 2 zeigt eine perspektivische Ansicht eines Filterelements gemäß einer Ausführungsform der Erfindung. Das in Figur 2 gezeigte Filterelement weist zwei ineinander liegende Faltenbälge auf. Es sei angemerkt, dass sich die vorliegende Erfindung sowohl auf ein Filterelement mit einem einfachen Faltenbalg als auch auf eine Anordnung mit zwei ineinander liegenden Faltenbälgen beziehen kann. Selbstverständlich können auch drei oder mehrere ineinander liegende oder parallele Faltenbälge vorgesehen sein. Die Bezugszeichen 10, 16, 17, 18 und 19 bezeichnen dabei eine inneren bzw. innen liegenden Faltenbalg, während die Bezugszeichen 20, 26, 27, 28 und 29 einen außen liegenden Faltenbalg bezeichnen. Die in Figur 2 gezeigte doppelte Bezeichnung für den inneren Faltenbalg resultiert daraus, dass auch ein Filterelement mit nur einem Faltenbalg vorgesehen sein kann, bei dem das innere Faltenbalgelement zugleich auch das äußere Faltenbalgelement darstellt. Die in Figur 2 gezeigte Ausführungsform zeigt einen Faltenbalg 10, 20 mit einem stärker gekrümmten Abschnitt 16, 26 sowie einem weniger stark gekrümmten Abschnitt 18, 28. Dabei kann der weniger gekrümmte Abschnitt 18, 28 zugleich auch eine Krümmung von null aufweisen, somit also gerade verlaufen. Darüberhinaus kann auch ein weiterer weniger gekrümmter Abschnitt 19, 29 vorgesehen sein, der in hier gezeigten Ausführungsform dem zweiten Abschnitt mit einer geringeren Krümmung 18, 28 gegenüberliegt. Aufgrund der in Figur 2 gezeigten Schnittansicht ist ein weiterer stärker gekrümmter Bereich 17, 27 nicht dargestellt. Bei der in Figur 2 gezeigten Anordnung entspricht im Wesentlichen der Bereich 16, 26 dem Bereich 17, 27 und der weniger gekrümmte Bereich 18, 28 dem Bereich 19, 29. Es sei jedoch angemerkt, dass die Bereiche 18, 19 auch nicht-parallel zueinander verlaufen können und die Krümmung der Bereiche 16 sowie des hier nicht gezeigten Bereiches 17 unterschiedlich voneinander sein können, sodass sich eine Umfangsgeometrie z.B. in Form einer Birne ergibt. In der in Figur 2 gezeigten Anordnung ist die Reingasseite und die Rohgasseite des ersten Filterelements 10 durch ein Dichtungselement 51 voneinander getrennt, wobei das Dichtungselement 51 die beiden Bereiche einer geringeren Krümmung 18, 19 miteinander fehlluftdicht verbindet. Auf der auf der axialen Erstreckungsachse A gegenüberliegenden Seite der Filterbälge ist eine Dichtungsgeometrie 52 vorgesehen, die den äußeren Filterbalg und den inneren Filterbalg fehlluftdicht miteinander verbindet und zugleich auch eine Trennung der Reingasseite und der Rohgasseite darstellt. In der hier gezeigten Ausführungsform ist zwischen dem inneren Filterelement und dem äußeren Filterelement ein Stützgerüst 40 vorgesehen, das als stabilisierender Abstandhalter und bzw. oder formgebendes Element der Filterbälge dient, sodass ein entsprechender Anströmkanal zwischen dem inneren Filterelement und dem äußeren Filterelement erhalten bleibt, auch wenn eine starke Anströmung des Filterelementes 1 erfolgt. Die Stützgeometrie bzw. Stützstruktur 40 kann dabei jedoch ferner auch die Aufgabe übernehmen, eine entsprechende Positionierung der in Figur 2 nicht detailliert dargestellten Filterfalten vorzunehmen, wie im Folgenden noch näher erläutert wird.

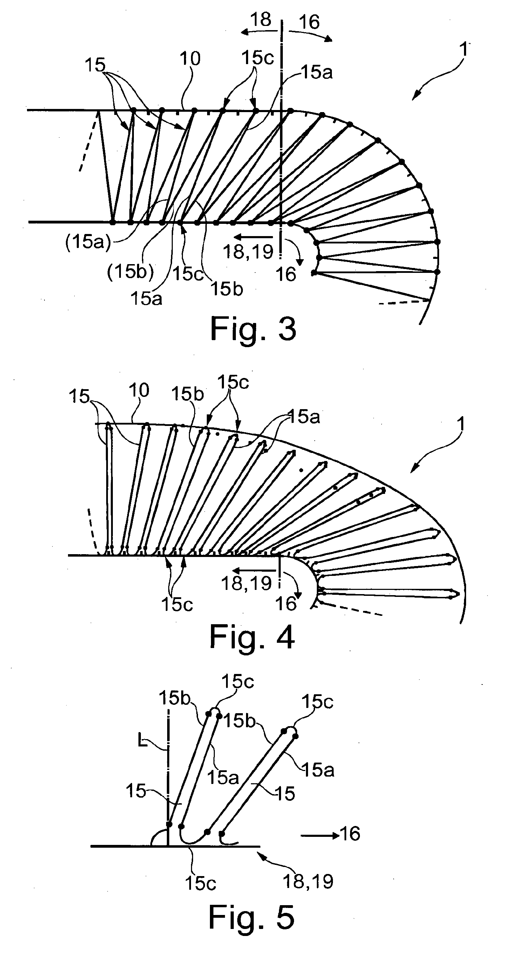

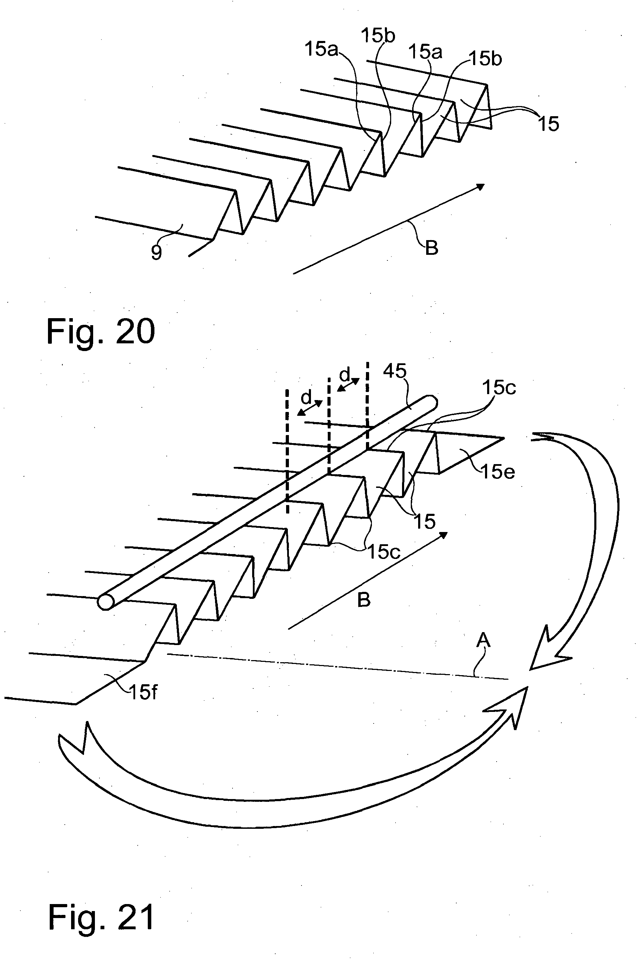

Figur 3 zeigt eine horizontale Schnittansicht einer Filterfaltenanordnung, bei der die Filterfalten 15 des Filterbalges 10 in einem zweiten Bereich 18 stärker zu einem ersten Bereich 16 hingeneigt sind, je näher sich die Filterfalten 15 an dem ersten Bereich 16 befinden. Auf diese Weise können die radial außenliegenden Filterkanten 15c in einem im Wesentlichen äquidistanten Abstand angeordnet werden, wodurch sich die Einströmbreite zwischen zwei benachbarten Filterfalten 15 entlang des äußeren Umfangs konstant gestaltet, aufgrund der Tatsache, dass die radial außen liegenden Filterkanten 15c jeweils einen gleichen Abstand aufweisen. Die radial innen liegenden Faltenkanten 15c können dabei ebenso äquidistant angeordnet sein. An dieser Stelle sei verstanden, dass der Abstand von radial außen liegenden Filterkanten 15c nicht konstant entlang des Umfangs sein muss, sondern der Sinn der Erfindung bereits erfüllt wird, wenn die radial nach außen gerichteten Filterkanten 15c einen größeren Abstand im zweiten Abschnitt 18 aufweisen, als er rein durch die Krümmung des zweiten Abschnittes 18 bedingt wäre. Die Faltenschenkel 15a und 15b können dabei zueinander geneigt sein, sodass ein bezüglich einer nach radial nach außen gerichteten Faltenkante 15c näher zu dem ersten Bereich mit stärkerer Krümmung zugewandter erster Faltenschenkel 15a kürzer ist als ein entsprechender zweiter Faltenschenkel 15b. Da die Faltung der Filterfalten des Faltenbalges entlang einer Bahnlänge B erfolgt, sowie beispielsweise der Figur 20 zu entnehmen ist, ist bei einer Ausgestaltung des Faltenbalges gemäß Figur 3 ein Abstand der jeweils abwechselnd nach oben bzw. unten verlaufenden Knicke über die Bahnlänge veränderlich, sodass sich die Länge des Faltenschenkels 15a und 15b allmählich vergrößert und anschließend (hier zum rechts liegenden Scheitelpunkt des ersten Bereiches 16 allmählich wieder verringert, sodass sich die Schrägstellung der Falten 15 gemäß Figur 3 einstellt. Mit anderen Worten können nicht nur zwei benachbarte Faltenschenkel 15a und 15b eine unterschiedliche Länge aufweisen, insbesondere, wenn die zusammengehörigen Faltenschenkel nicht parallel verlaufen, sondern auch die gleichartigen Faltenschenkel (die jeweils ersten bzw. die jeweils zweiten) über die Umfangsweglänge.

Figur 4 zeigt eine weitere Ausführungsform der Erfindung, bei der die Faltung ebenfalls in einer horizontalen Schnittansicht dargestellt ist. In der in Figur 4 gezeigten Anordnung sind die Faltenschenkel 15a und 15b der Falten 15 im Wesentlichen gleich lang und parallel zueinander. Im Gegensatz zu der in Figur 3 gezeigten Ausführungsform, bei der der Abstand der Linie, auf der die radial nach innen gerichteten Faltenkante 15c liegen und der Linie, auf der die radial nach außen gerichteten Faltenkanten 15c liegen im Wesentlichen konstant ist, erhält die Linie, auf der die radial nach außen gerichteten Faltenkanten 15c der in Figur 4 gezeigten Anordnung liegen, eine annähernd elliptische Form, sodass sich der Abstand der äußeren Mantelfläche und der inneren Mantelfläche zunächst verringert, und sich die Neigung der Filterfalten 15 erhöht und im ersten Bereich 16 anschließend wieder verkleinert, so, wie in Figur 4 gezeigt.

Figur 5 zeigt eine Detailansicht der mit Bezugnahme auf Figur 4 gezeigten Anordnung, bei der die Neigung Filterfalten 15 in Richtung eines ersten Abschnitts 16 im Bereich des zweiten Abschnitts 18 bzw. 19 zunimmt. Es sei an dieser Stelle angemerkt, dass die Schenkellänge der Faltenschenkel 15a und 15b auch bei parallel verlaufenden Schenkeln 15a und 15b variieren kann, sodass sich, wenn gewünscht, auch ein im Wesentlichen konstanter Abstand zwischen der inneren Mantelfläche und der äußeren Mantelfläche einstellen kann, so wie in Figur 3 gezeigt.

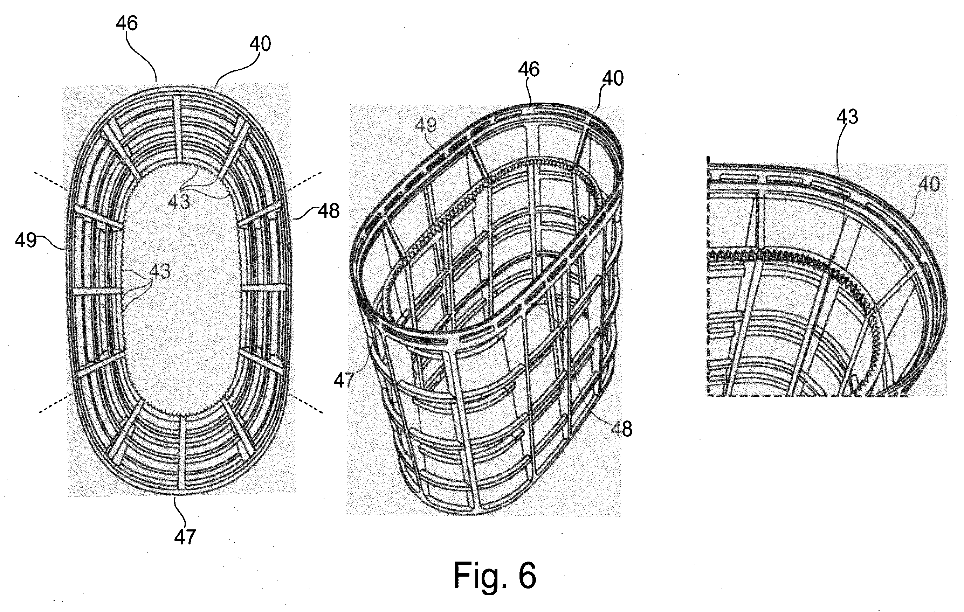

Figur 6 zeigt ein Stützgerüst 40 gemäß einer Ausführungsform der Erfindung. Das Stützgerüst korrespondiert von seiner äußeren Form her mit der äußeren Form des hier nicht gezeigten Filterelements 1. Dabei weist das Stützgerüst ebenfalls einen ersten Bereich 46, einen zweiten Bereich 48, einen dritten Bereich 47 und einen vierten Bereich 49 auf. Der erste Bereich 46 und der dritte Bereich 47 weisen dabei eine wesentlich stärkere Krümmung auf als der zweite Bereich 48 und vierte Bereich 49. Das Stützgerüst kann dabei zum Einen als formwahrendes Stützgerüst für den Faltenbalg dienen und zum Anderen ebenso als Abstandhalter von zwei ineinander liegenden Faltenbälgen dienen, sodass diese ihre Form auch bei einer starken Anströmluft wahren. Das in Figur 6 gezeigte Stützgerüst 40 weist darüberhinaus eine Anzahl von Ausnehmungen 43 auf, die entlang des Umfanges verteilt sind. In diesen Ausnehmungen können beispielsweise die Filterfalten 15, insbesondere die Faltenkanten 15c eingreifen, sodass diese entlang des Umfanges positioniert werden können. Gemäß einer Ausführungsform können entlang des Umfanges des Stützgerüstes 40 eine Anzahl von Ausnehmungen 43 vorgesehen sein, die im Wesentlichen der Anzahl der nach außen gerichteten Filterfaltenkanten 15c entspricht, sodass im Wesentlichen in jeder Ausnehmung 43 eine radial nach außen gerichtete Filterkante 15c zu liegen kommt. Aufgrund einer im Wesentlichen äquidistanten Ausgestaltung der Ausnehmungen 43 kann dabei eine Egalisierung der Faltenkantenabstände erreicht werden. Es sei an dieser Stelle angemerkt, dass das Stützgerüst 40 selbstverständlich auch für herkömmliche Faltenbälge verwendet werden kann, wobei dann insbesondere im Bereich der stärkeren Krümmung 46, 47 nicht jede Ausnehmung 43 sondern nur ein Teil der Ausnehmungen 43 mit entsprechenden Faltenkanten 15c besetzt wird.

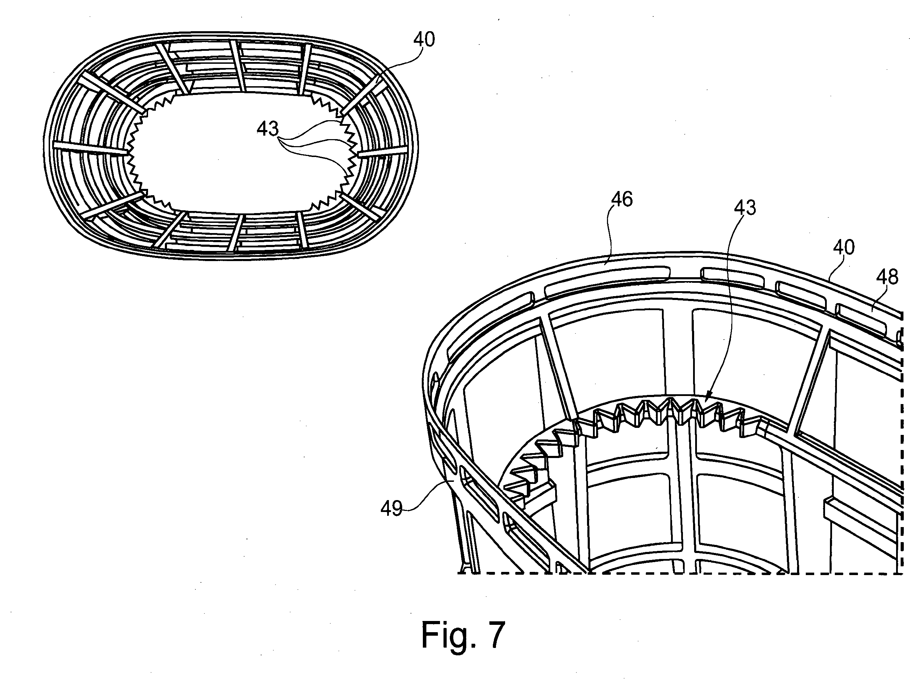

Figur 7 zeigt eine weitere Ausführungsform einer Stützkonstruktion 40, wobei in der in Figur 7 gezeigten Anordnung die Ausnehmungen 43 lediglich im Bereich des ersten Abschnittes 46 und des in Figur 7 nicht näher bezeichneten dritten Abschnittes 47 vorgesehen sind. In der in Figur 7 gezeigten Anordnung können sich die Faltenkanten in den Bereichen einer geringeren Krümmung 18, 28, 19, 29 in den korrespondierenden Bereichen 48, 49 des Stützgerüstes 40 im Wesentlichen frei verteilen, während die Faltenkanten im Bereich der stärkeren Krümmung 16, 17, 26, 27 durch die Ausnehmungen 43 im Bereich des Stützgerüstes 40 mit stärkerer Krümmung 46, 47 fixiert werden.

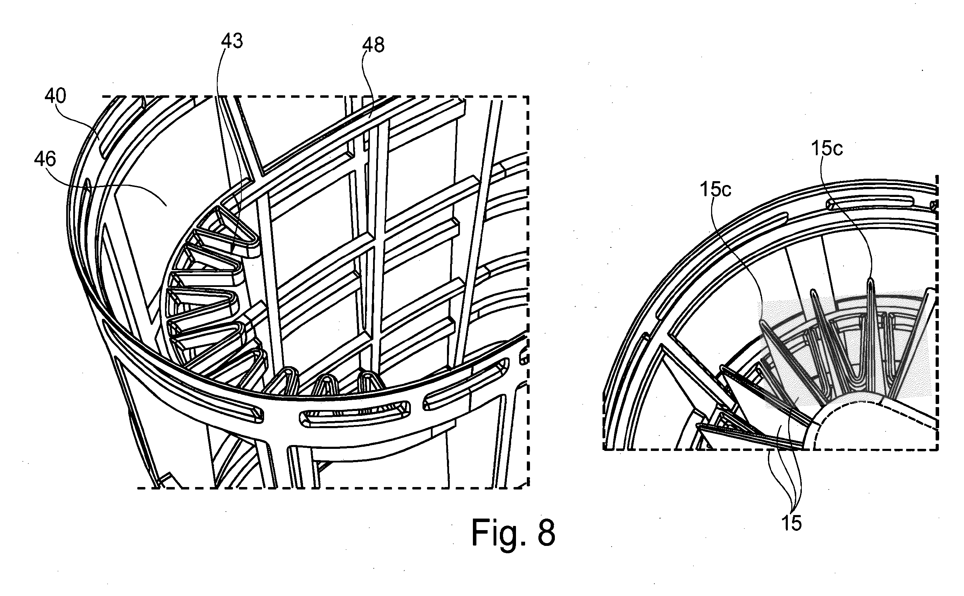

Figur 8 zeigt eine weitere Ausführungsform der Erfindung, bei der die Ausnehmungen 46 tiefer ausgestaltet sind und zugleich einen größeren Abstand zwischen den radial nach außen gerichteten Filterfaltenkanten 15c gewährleisten. Analog der in Figur 7 gezeigten Anordnung sind in der in Figur 8 gezeigten Anordnung die Ausnehmungen 43 wiederum nur in dem Bereich einer stärkeren Krümmung 46 vorgesehen, sodass sich in dem Bereich einer geringeren Krümmung 48 keine Ausnehmungen befinden, sodass sich dort die radial nach außen gerichteten Faltenkanten 15c frei anordnen können. Es sei jedoch verstanden, dass sich auch in diesen Bereichen Ausnehmungen oder Fixierungen befinden können, um die Position der radial nach außen gerichteten Faltenkanten 15c festzulegen.

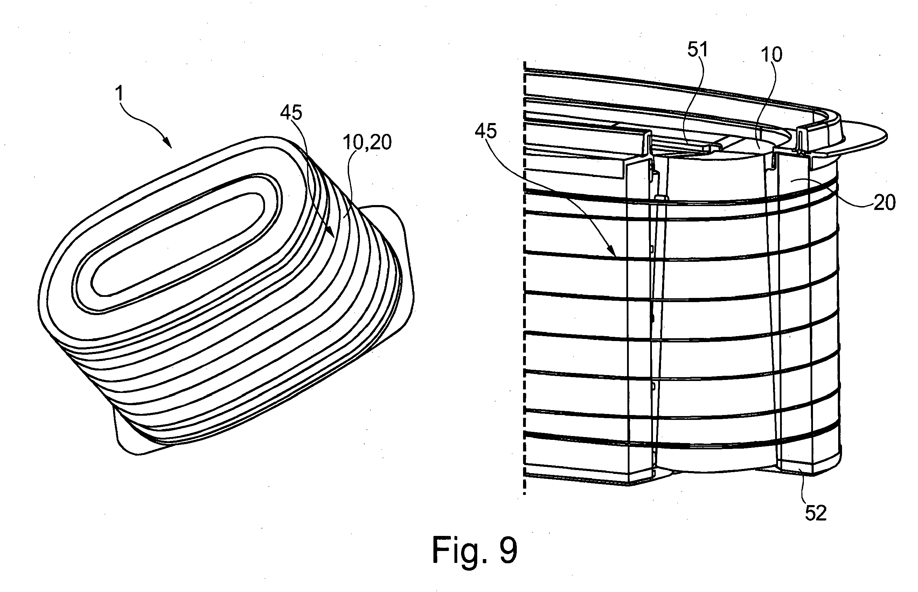

Figur 9 zeigt eine weitere beispielhafte Ausführungsform der Erfindung, bei denen ein Filterelement 1 an der äußeren Mantelfläche mit einer Anzahl von Leimraupen 45 versehen ist, um die in Figur 9 nicht detailliert dargestellten radial nach außen gerichteten Faltenkanten vom Abstand her zu fixieren. Die Leimraupe 45 kann in diesem und in anderen Ausführungsformen als Leimspur oder als mit Leim getränkter Faden oder in anderer Form an- oder aufgebracht werden; eine bevorzugte Form ist ein Leimfaden. Bei einer Leimraupenanordnung durch einen Leimfaden kann ein leimgetränkter Faden um das Element gewickelt werden, nach dem Aushärten verbindet der Leim den Faden und das Element und stabilisiert das Element. Die Mehrzahl von Leimraupen 45 kann dabei kontinuierlich durch eine schraubenlinienförmige Anordnung einer durchgehenden Leimraupenschlange erfolgen, die fertigungstechnisch kontinuierlich auf der äußeren Mantelfläche des Filterelements 1 angebracht werden kann. Es sei verstanden, dass eine derartige Leimraupe 45 nicht nur auf dem äußeren Filterbalg 20, sondern auch auf dem inneren Filterbalg 10 angeordnet sein kann, um den Abstand der radial nach außen gerichteten Filterfaltenkanten zu fixieren. Ferner sei angemerkt, dass eine derartige Leimraupe auch auf einer inneren Mantelfläche angeordnet sein kann, um die radial nach innen gerichteten Faltenkanten eines Faltenbalges zu fixieren. Darüberhinaus kann eine Fixierung der Filterfaltenabstände auch durch entsprechende Dichtungsanordnungen 51 bzw. 52 erfolgen, die ebenfalls eine Fixierung der Falten zueinander darstellen können.

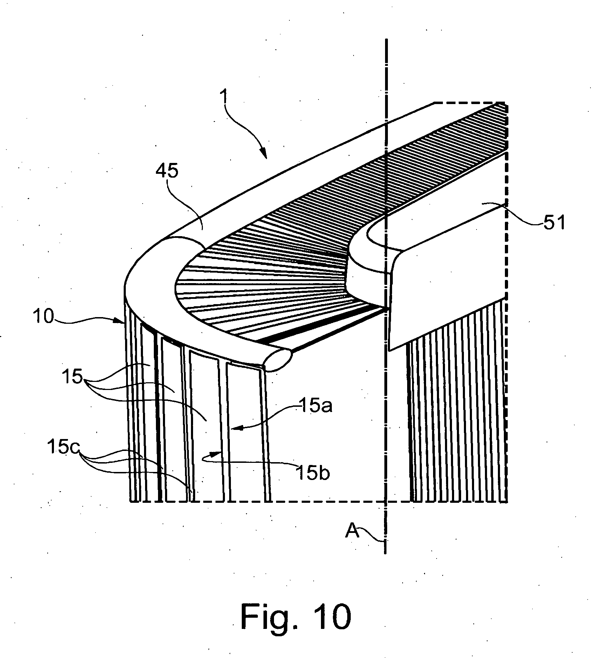

Figur 10 zeigt eine weitere Ausgestaltung eines Filterelements 1, bei der sich die Leimraupe 45 auf einer Stirnseite der Filterfalten 15 befindet, wobei diese Stirnseite in Richtung der axialen Erstreckungsachse A gerichtet ist. Auf diese Weise werden die seitlichen Anströmflächen nicht durch eine Leimraupe abgedeckt. In der in Figur 10 gezeigten Anordnung erfolgt durch die Leimraupe 45 eine Fixierung der radial nach außen gerichteten Faltenkanten 15c, wobei die radial nach innen gerichteten Faltenkanten durch eine Dichtungsanordnung 51 fixiert wird. Um eine Abdichtung der Reingasseite zu der Rohgasseite zu erreichen, sind in der in Figur 10 gezeigten Anordnung die Zwischenräume zwischen Faltenschenkeln 15a und 15b im Bereich der Stirnfläche fehlluftdicht miteinander verbunden, sodass keine Luftströmung unbeabsichtigt das Filterelement passieren kann. Es sei an dieser Stelle verstanden, dass anstelle einer Leimraupe auch eine andere äquivalente Fixierung erfolgen kann, beispielsweise durch eine anderweitige Verklebung, entsprechende Abstandhalter oder ein Einspannen der entsprechenden Filterfalten 15.

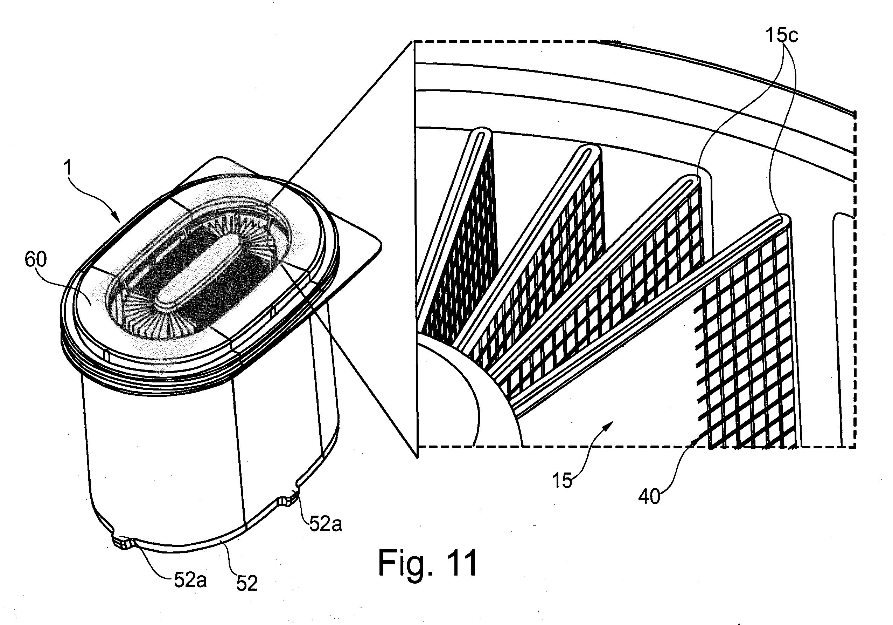

Figur 11 zeigt eine weitere Ausführungsform der Erfindung, bei der die Filterfalten 15 mit einem Stützgitter 40 versehen sind, das sich auf der Oberfläche des Filtermediums befindet. Auf diese Weise kann das Filtermedium, beispielsweise ein Filterpapier unmittelbar mit einer entsprechenden Stützstruktur 40 versehen werden, bevor dieses gefalzt und in eine Faltengeometrie gebracht wird, sodass eine anschließende Fixierung entfallen kann. Derartig ausgerüstete Filtermedien bzw. Filterpapiere weisen eine höhere Stabilität gegenüber starken Luftströmungen auf, da diese eine höhere selbsttragende Festigkeit aufweisen. Eine derartige Stützstruktur 40 kann beispielsweise durch ein Aufleimen eines Verstärkungsmaterials folgen, wie beispielsweise einem Kunststoffgitter, einem Metallgitter oder auch einer entsprechenden Strukturprägung auf dem Filtermedium. Es sei verstanden, dass das Gitter auch nach dem Falzvorgang aufgebracht werden kann, insbesondere wenn das Gitter und das Filtermedium getrennt gefalzt werden und anschließend zusammengefügt werden.

Anstelle der mit Bezugnahme auf die Figuren 6, 7, 8 und 11 beschriebenen Stützkonstruktionen kann eine Fixierung der Falten auch durch die Dichtungsanordnungen 51, 52, erfolgen, die beispielsweise aus einem Polyurethanmaterial, beispielsweise Polyurethanschaum, gefertigt sind. Diese können beispielsweise stirnkantenverleimt ausgebildet sein, sodass eine entsprechende Verklebung der Stirnseiten derart erfolgt, dass keine Fehlluftströme von der Rohgasseite auf die Reingasseite gelangen können. Bei einer inneren Verklebung der Faltenschenkel kann die jeweils gegenüberliegende Seite des Schenkels frei bleiben und als Anströmfläche in axialer Richtung dienen. Dies kann beispielsweise so ausgeführt sein, dass bei einem Filterbalg nur an einer axialen Stirnseite die Stirnkanten der Filterfalten zusammengeheftet sind, wohingegen die Stirnkanten der Filterfalten an der gegenüberliegenden Stirnseite von einem Abdeckelement 52 abgedeckt sind. Bezogen auf die beiden Filterbälge 10, 20 wird das Zusammenheften der Stirnkanten der Filterfalten und der Abdeckung wechselseitig durchgeführt, sodass beispielsweise am radial außenliegenden Filterbalg die Stirnkanten verklebt und auf der gegenüberliegenden axialen Stirnseite von einem Abdeckring abgedeckt sind, der zugleich auch als Stoß- bzw. Kantenschutz dienen kann. Darüberhinaus kann an dem Filterelement eine Griffanordnung 94 angeformt sein, die ein leichteres Entnehmen des Filterelementes 1 aus einem Luftfiltergehäuse 100 erlaubt. Ferner kann sowohl an der Abdeckplatte 60 als auch an dem der Abdeckplatte gegenüber liegenden Dichtungselement 52 eine Anzahl von Ausrichtungs- oder Zentriernocken ausgebildet sein, die zu einer ordnungsgemäßen Positionierung des Filterelements 1 in dem Luftfiltergehäuse 100 dienen. Diese Zentriernocken können ebenfalls aus einem Polyurethanschaum gefertigt sein, sodass diese nicht nur als Zentrierungs- sondern auch als Schwingungsdämpfungselemente dienen können. Die Zentriernocken 52a können dabei in regelmäßigen Abständen oder auch unregelmäßig entlang des Umfangs des Dichtungselements 52 angeordnet sein. Über eine entsprechende Verteilung der Zentriernocken 52a kann ebenfalls eine Kodierung erfolgen, die sicherstellt, dass nur solche Filterelemente 1 in ein Luftfiltergehäuse 100 eingesetzt werden, die für dieses Luftfiltergehäuse vorgesehen sind. Dies kann beispielsweise dadurch erreicht werden, dass entsprechende Aufnehmungen für die Zentriernocken 52a im Luftfiltergehäuse vorgesehen sind, die einen ordnungsgemäßen Einbau auch für den Bediener wahrnehmbar nur dann erlauben, wenn das korrekte Filterelement 1 in das Luftfiltergehäuse 100 eingesetzt wird.

Bei Filterelementen mit einem Faltenbalg besteht grundsätzlich bei einer entsprechenden Anströmung die Gefahr, dass die Anströmluft zwei benachbarte Falten aufeinander drückt und somit die Falten kollabieren. Unter dem Kollabieren einer Falte versteht man das Zusammenschließen der Falten bei einem Durchströmen, bei welchem die Falten zumindest teilweise so aufeinander liegen, dass ein Durchtritt eines zu filternden Fluides verhindert oder zumindest verschlechtert wird. Dies kann neben der Bereitstellung einer Stützstruktur 40 auch durch ein entsprechendes Strukturprägen des Filtermediums verhindert werden, bei dem das Filtermedium partiell erhaben ausgestaltet wird, sodass verhindert wird, dass zwei benachbarte Schichten eines Filtermediums derart aufeinander gedrückt werden, dass die entsprechenden anzuströmenden Filterflächen aufeinander liegen. Dies kann beispielsweise mit geeigneten Prägewerkzeugen geschehen, die eine entsprechende Struktur aufbringen.

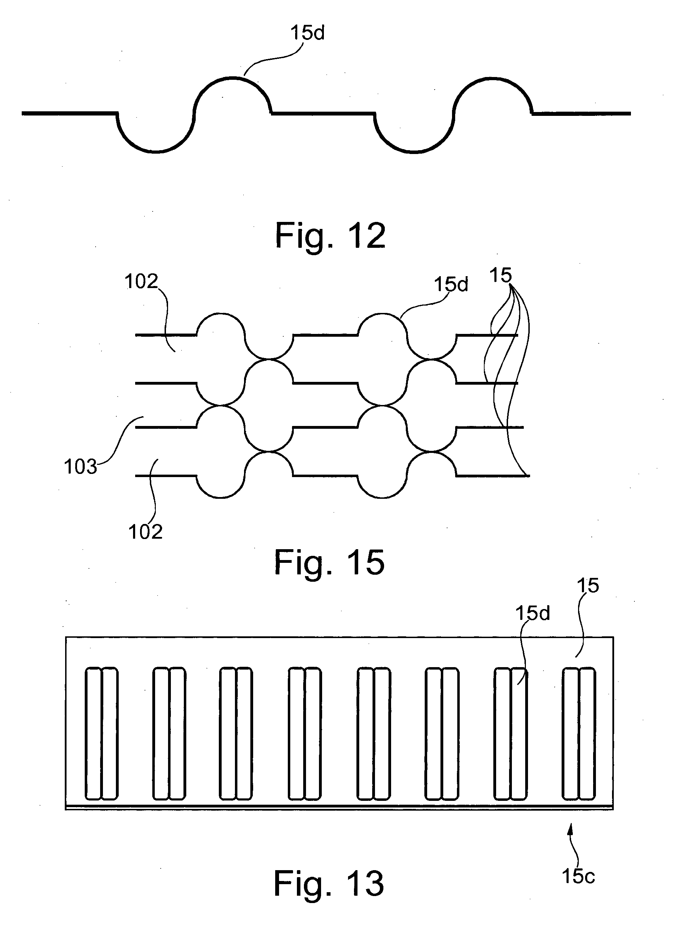

Figur 12 zeigt eine derartige schematische Darstellung, bei der eine sogenannte S-Prägung auf das Filtermedium aufgebracht wurde. Um zu verhindern, dass eine derartige Prägung beispielsweise durch einen mechanischen oder beispielsweise einen Feuchteeinfluss rückgängig gemacht wird, kann eine derartige Prägung stabilisiert werden, beispielweise durch Aufbringen in einer Beschichtung, oder durch ein chemisches oder thermisches Stabilisieren. Eine derartige Nachhärtung kann beispielsweise durch eine UV-Bestrahlung erfolgen. Die in Figur 12 gezeigte S-Prägung 15d ist so ausgestaltet, dass bei benachbarten Filtermedien, die aufeinander liegen, entsprechende erhabene Bereiche gegenüberliegen, sodass die eigentlichen Filterfalten 15 in einem gewissen Abstand zueinander gehalten werden. Auf diese Weise kann ein Rohgasraum 102 bzw. ein Reingasraum 103 offen gehalten werden, sodass eine Anströmung des zu filternden Fluides in den Zwischenraum gewährleistet sein kann.

Mehrere übereinander liegende mit einer Prägung 15d versehenen Filterfalten 15 werden in Figur 15 dargestellt. Die Prägung kann dabei selbstverständlich auch in einer beliebigen anderen Form erfolgen, sofern die erhabenen Stellen 15d einen Abstand zu einem benachbarten Filtermedium bzw. einer benachbarten Filterfalte 15 gewährleisten. Beispielsweise kann einer erhabenen Stelle auch eine glatte Stelle eines benachbarten Filtermediums gegenüberliegen, sodass ein Abstand gewährleistet wird.

Figur 13 zeigt eine Aufsicht auf eine derartig geprägte Filterfalte 15, bei der eine Prägung 15d vorgesehen ist.

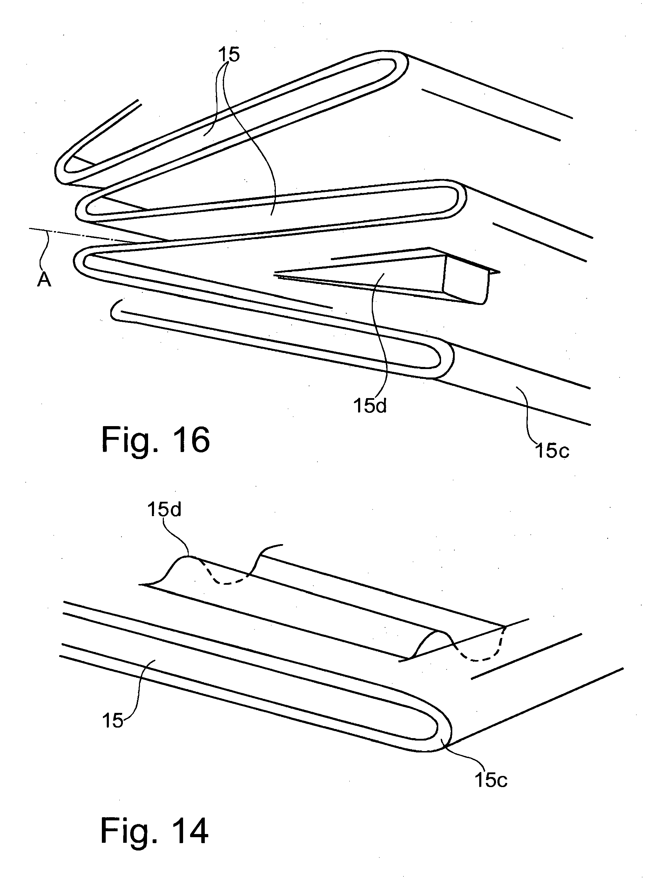

Figur 14 zeigt eine perspektivische Ansicht einer derartigen strukturierten Filterfalte 15, bei der eine Prägung 15d in der mit Bezugnahme auf Figur 12 beschriebenen S-Prägung vorgesehen ist.

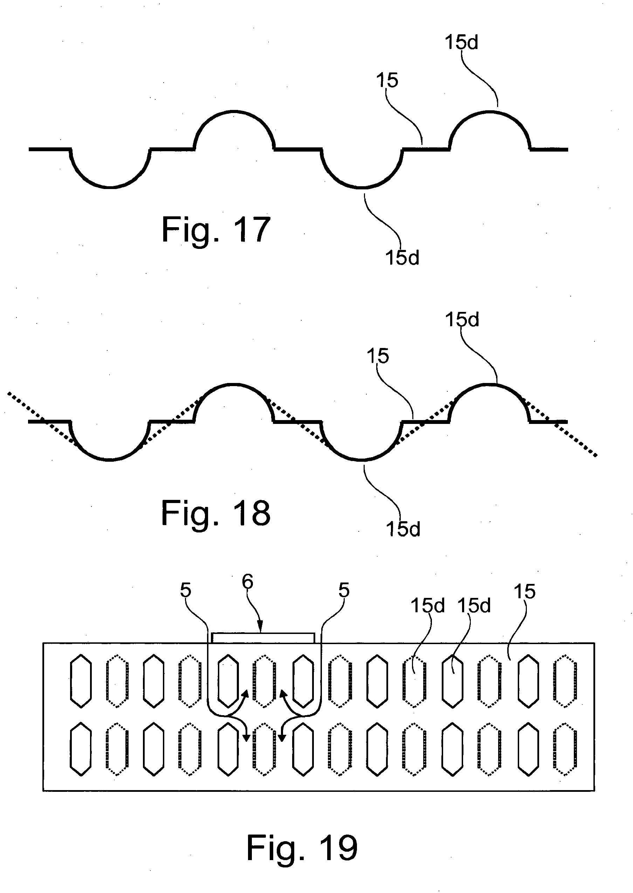

Eine alternative Prägungsgeometrie kann erreicht werden durch eine Prägung, bei der die gegenläufigen Nocken nicht aneinander anschließen, so wie bei der mit Bezug auf Figur 12 beschriebenen S-Prägung. Eine derartige Struktur ist schematisch in Figur 17 gezeigt. Dabei schließen die jeweils nach unten bzw. nach oben ausgewölbten Prägungen 15d nicht unmittelbar aneinander an, sodass sich durch eine entsprechende Rückstellkraft des Filtermediums eine Struktur ergibt, die in der gestrichelten Linie in Figur 18 dargestellt ist. Auf diese Weise kommt es zu einer Vergrößerung der Faltenöffnung, die auch eine größere Stabilität im Vergleich zu einer S-Prägung aufweist. Eine derartige Prägestruktur wird auch Diamant-Prägung genannt.

Figur 16 zeigt eine weitere beispielhafte Ausgestaltung, bei der die Prägung 15d in Richtung der radial nach außen gerichteten Filterfalten in ihrer Höhe zunimmt, sodass die radial nach außen zunehmende Prägungshöhe zugleich auch einen erhöhten Faltenabstand der Filterfalten 15 gewährleistet. Auf diese Weise kann auch ohne eine äußere Stützstruktur ein Kollabieren der Filterfalten gewährleistet werden, bzw. eine Egalisierung des Filterfaltenabstandes 15 erreicht werden. Insbesondere kann eine keilförmige bzw. konische Ausgestaltung der Zwischenräume zwischen den Filterfalten gewährleistet werden. Eine derartige keilförmige Prägung 15d, wie sie mit Bezugnahme auf Figur 16 beschrieben ist, unterstützt eine Egalisierung des Filterfaltenabstandes, so wie er mit Bezugnahme auf die Figuren 3, 4 und 5 beschrieben ist.

Figur 19 zeigt eine weitere beispielhafte Ausgestaltung der Erfindung, bei der die Prägestruktur aus einer in Richtung der Faltentiefe unterbrochenen Prägung besteht, wobei eine derartige unterbrochene Prägung auch eine Querströmung 5 parallel zur Faltenkante 15c erlaubt, insbesondere wenn durch ein Strömungshindernis 6 die ursprüngliche Anströmöffnung blockiert ist. Auf diese Weise kann eine Filterkapazität auch dann aufrechterhalten werden, wenn beispielsweise eine Blockierung des Anströmkanals durch ein Hindernis 6, etwa ein angesaugtes Blatt versperrt ist. Die in Figur 19 gezeigte Struktur zeigt abwechselnd eine erhabene (durchgezogene Linie) und eine vertiefte (gestrichpunktete Linie) Prägung, die eine entsprechende Bereitstellung von Querströmungs- und Längsströmungskanälen erlaubt. Eine derartige Prägung kann bereits im Herstellungsprozess des Filtermediums bzw. des Filterpapiers eingebracht werden, insbesondere kann eine Rillierung bzw. eine Wellenstruktur bereits im Herstellungsprozess des Papieres bzw. des Filtermediums eingebracht werden.

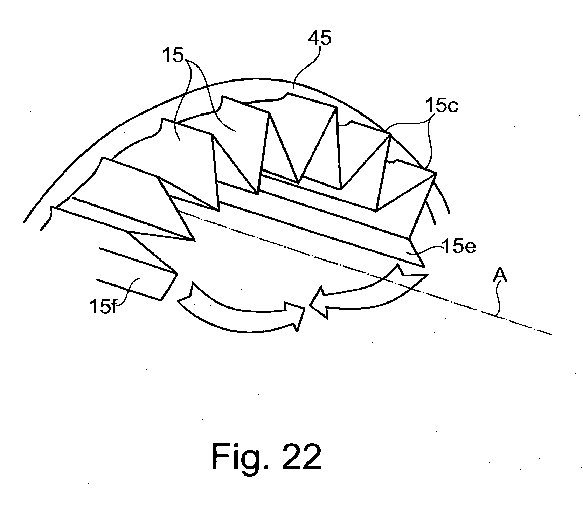

Im Folgenden wird mit Bezugnahme auf die Figuren 20, 21 und 22 ein Herstellungsverfahren beschrieben, mit dem eine Egalisierung des Faltenabstands erreicht werden kann.

In einem ersten Schritt wird eine Bahn 9 eines Filtermaterials bzw. eines Filtermedium quer zu einer Bahnlauflänge B gefalzt, sodass eine Anzahl von Filterfalten 15 entsteht. Diese Filterfalten können entweder regelmäßig ausgestaltet sein, um eine Struktur zu erhalten, wie sie mit Bezugnahme auf Figur 4 beschrieben ist, oder auch unregelmäßig gefalzt sein, sodass eine unterschiedliche Länge der entsprechenden Filterschenkel 15a, 15b erreicht werden kann, um letztlich eine Struktur zu erhalten, wie sie mit Bezugnahme auf Figur 3 beschrieben ist.

In einem weiteren Schritt wird eine Fixierung der später radial nach außen gerichteten Filterkanten 15c vorgenommen, beispielsweise durch Aufbringen einer Leimraupe 45. Eine derartige Fixierung kann jedoch auch durch andere äquivalente Mittel erfolgen. Durch eine entsprechende Fixierung kann ein gleichmäßiger Abstand d der später radialen nach außen gerichteten Filterkanten 15c erreicht werden. In einem weiteren Schritt werden nun die Faltenkanten bzw. Enden 15e und 15f so um die spätere axiale Erstreckungsrichtung A umgebogen, dass die in Figur 21 gezeigten Leimraupe 45 peripheral entlang des äußeren Umfangs bzw. der äußeren Mantelfläche des Faltenbalgs zu liegen kommt. Eine derartige Filterfaltenanordnung 15 weist einen gleichmäßigen Abstand der radial nach außen gerichteten Faltenkanten 15c auf, sodass ein egalisierter Abstand der Falten 15 erreicht wird. An diesem Abstand ändert sich im Wesentlichen auch nichts mehr, wenn die geschlossene Balganordnung zu einem Oval zusammengedrückt wird, da eine Fixierung der radial nach außen gerichteten Filterkante 15c durch beispielsweise eine Leimraupe 45 erfolgt.

Es sei angemerkt, dass der Begriff " umfassen" weitere Elemente nicht ausschließt, ebenso wie der Begriff " ein" und " eine" mehrere Elemente und Schritte nicht ausschließt. Die verwendeten Bezugszeichen dienen lediglich zur Erhöhung der Verständlichkeit und sollen keinesfalls als Einschränkung betrachtet werden, wobei der Schutzbereich der Erfindung durch die Ansprüche wiedergegeben wird.

## Patentansprüche

1. Verfahren zur Herstellung eines ovalen Faltenbalges, wobei das Verfahren aufweist:
- Falten (S10) einer sich in einer Längsrichtung (B) erstreckenden Bahn (9) eines Filtermaterials zu Filterfalten (15), wobei das Falten im Wesentlichen quer zu der Längsrichtung erfolgt und die Filterfalten (15) abwechselnde Knickrichtungen aufweisen, derart, dass eine Mehrzahl von quer verlaufenden Filterfalten (15) mit Faltenkanten (15c) auf einer ersten Seite und eine Mehrzahl von quer verlaufenden Filterfalten (15) mit Faltenkanten (15c) auf einer zweiten Seite entstehen,
- Fixieren (S20) der Faltenkanten (15c) der ersten Seite in einem regelmäßigen Abstand (d) zueinander,
- Umbiegen (S30) der Bahn (9) um eine quer zur Längsrichtung verlaufende Achse einer axialen Ausdehnungsrichtung (A) derart, dass die fixierten Faltenkanten (15c) radial nach außen gerichtet liegen,
- Verbinden (S40) von zwei gegenüberliegenden und quer zur Längsrichtung (B) verlaufenden Kanten (15e, 15f) derart, dass in einer im Wesentlichen orthogonal zur axialen Längsrichtung (A) verlaufenden Ebene einer radialen Erstreckungsrichtung eine ovale Umfangskontur des Faltenbalges (10) entsteht.

2. Verfahren nach Anspruch 1, wobei die ovale Umfangskontur in einer
zu der axialen Ausdehnungsrichtung orthogonal verlaufenden Ebene einer radialen Ausdehnungsrichtung einen ersten Abschnitt (16) mit einer ersten Krümmung und einen benachbarten zweiten Abschnitt (18) mit einer zweiten Krümmung aufweist,
wobei die zweite Krümmung geringer ist als die erste Krümmung,
wobei im zweiten Abschnitt (18) die Neigung der Filterfalten (15) zu einer Lotrechten (L) bezogen auf den Verlauf des zweiten Abschnittes (18) zumindest teilabschnittsweise in Richtung eines benachbarten Abschnittes (16, 17) zunimmt.

3. Verwendung eines Verfahrens nach einem der Ansprüche 1 oder 2 zur Herstellung eines Filterelements für einen Luftfilter einer Brennkraftmaschine, wobei das Filterelement (1) aufweist:
einen ersten ovalen Filterbalg (10) mit einer Mehrzahl von im Wesentlichen in einer axialen Ausdehnungsrichtung (A) des Filterelementes verlaufenden Filterfalten (15) mit einem jeweils an einer Faltenkante (15c) zusammenlaufen ersten Faltenschenkel (15a) und zweiten Faltenschenkel (15b),
wobei der erste Filterbalg (10) in einer zu der axialen Ausdehnungsrichtung orthogonal verlaufenden Ebene einer radialen Ausdehnungsrichtung einen ersten Abschnitt (16) mit einer ersten Krümmung und einen benachbarten zweiten Abschnitt (18) mit einer zweiten Krümmung aufweist,
wobei die zweite Krümmung geringer ist als die erste Krümmung,
wobei im zweiten Abschnitt (18) die Neigung der Filterfalten (15) zu einer Lotrechten (L) bezogen auf den Verlauf des zweiten Abschnittes (18) zumindest teilabschnittsweise in Richtung eines benachbarten Abschnittes (16, 17) zunimmt.

4. Verwendung nach Anspruch 3, wobei im ersten Abschnitt (16) die Neigung der Filterfalten (15) zu einer Lotrechten (L) bezogen auf den Verlauf des ersten Abschnittes zumindest teilabschnittsweise in Richtung eines benachbarten Abschnittes (18, 19) abnimmt.

5. Verwendung nach einem der Ansprüche 3 und 4, wobei der erste Filterbalg (10) ferner einen dritten Abschnitt (17) mit einer dritten Krümmung und einen vierten Abschnitt (19) mit einer vierten Krümmung aufweist, wobei der zweite Abschnitt (18) und der vierte Abschnitt (19) jeweils derart zwischen dem ersten Abschnitt (16) und dem dritten Abschnitt angeordnet sind, dass der erste Abschnitt (16), der zweite Abschnitt (18), der dritte Abschnitt (17) und der vierte Abschnitt (19) eine geschlossene ovale Umfangskontur darstellen.

6. Verwendung nach Anspruch 5, wobei der zweite Abschnitt (18) und der vierte Abschnitt (19) eine im Wesentlichen übereinstimmende Krümmung aufweisen.

7. Verwendung nach einem der Ansprüche 5 und 6, wobei der erste Abschnitt (16) und der dritte Abschnitt (17) eine im Wesentlichen übereinstimmende Krümmung aufweisen.

8. Verwendung nach einem der Ansprüche 3 bis 7, wobei eine Fläche des ersten Faltenschenkels (15a) und eine Fläche des benachbarten zweiten Faltenschenkels (15b) bezüglich einer radial außen liegenden Faltenkante (15c) im Wesentlichen parallel ist.

9. Verwendung nach einem der Ansprüche 3 bis 8, wobei das Filterelement (1) ein Stützgerüst (40) aufweist mit entlang eines in einer radialen Ausdehnungsrichtung ovalen Umfangs regelmäßigen Ausnehmungen (43) zur Aufnahme der Faltenkanten (15c).

10. Verwendung nach einem der Ansprüche 3 bis 9, wobei das Filterelement (1) eine Leimfadenraupe (45) zur Stabilisierung des Abstandes aufweist.

11. Verwendung nach Anspruch 10, wobei die Leimfadenraube (45) an einer äußeren Mantelfläche auf radial nach außen gerichteten Faltenkanten (15c) haftend aufliegt.

12. Verwendung nach einem der Ansprüche 9 und 10, wobei die Leimfadenraupe auf einer in die axiale Ausdehnungsrichtung (A) gerichtete Stirnkante der Filterfalten (15) haftend aufliegt.

13. Verwendung nach einem der Ansprüche 3 bis 12, wobei an einem ersten axialen Ende (11) des ersten Filterbalges (10) ein erstes Dichtungselement (51) vorgesehen ist zur fehlluftdichten Trennung einer Reingasseite und einer Rohgasseite, wobei das Dichtungselement (51) ausgelegt ist zum Halten des Abstandes der Filterfalten (15).

## Claims

1. Method for manufacturing an oval filter bellows, the method featuring:
- folding (S10) of a web (9) of a filter material extending in a longitudinal direction (B) to form filter folds (15), the folding being substantially realized transversely to the longitudinal direction and the filter folds (15) featuring alternate bending directions in such a way that a plurality of transversely extending filter folds (15) with fold edges (15c) are created on a first side and a plurality of transversely extending filter folds (15) with fold edges (15c) on a second side,
- fixing (S20) of the fold edges (15c) of the first side at a regular distance (d) to each other,
- bending (S30) of the web (9) around an axis of an axial expansion direction (A) extending transversely in relation to the longitudinal direction in such a way that the fixed fold edges (15c) are radially outwardly directed,
- connecting (S40) two edges (15e, 15f) oppositely positioned and extending transversely to the longitudinal direction (B) in such a way that in a plane of a radial extension direction extending substantially orthogonally in relation to the axial longitudinal direction (A) an oval circumferential contour of the filter bellows (10) is created.

2. Method according to claim 1, the oval circumferential contour featuring in a plane of a radial expansion direction extending orthogonally in relation to the axial expansion direction a first section (16) with a first curvature and an adjacent second section (18) with a second curvature,
the second curvature being less curved than the first curvature,
the inclination of the filter folds (15) in the second section (18) increasing in relation to a vertical line (L) with regard to the extension of the second section (18) at least sectionwise in the direction of an adjacent first section (16, 17).

3. Utilization of a method according to one of the claims 1 or 2 for manufacturing a filter element for an air filter of an internal combustion engine, the filter element (1) featuring:
a first oval filter bellows (10) with a plurality of filter folds (15) extending substantially in an axial expansion direction (A) of the filter element with a first fold flank (15a) and a second fold flank (15b) converging each at a fold edge (15c),
the first filter bellows (10) featuring in a plane of a radial expansion direction extending orthogonally in relation to the axial expansion direction a first section (16) with a first curvature and an adjacent second section (18) with a second curvature,
the second curvature being less curved than the first curvature,
the inclination of the filter folds (15) in the second section (18) increasing in relation to a vertical line (L) with regard to the extension of the second section (18) at least sectionwise in the direction of an adjacent first section (16, 17).

4. Utilization according to claim 3, the inclination of the filter folds (15) in the first section (16) decreasing in relation to a vertical line (L) with regard to the extension of the first section at least sectionwise in the direction of an adjacent section (18, 19).

5. Utilization according to one of the claims 3 and 4, the first filter bellows (10) featuring furthermore a third section (17) with a third curvature and a fourth section (19) with a fourth curvature, the second section (18) and the fourth section (19) being disposed each between the first section (16) and the third section in such a way that the first section (16), the second section (18), the third section (17), and the fourth section (19) represent a closed oval circumferential contour.

6. Utilization according to claim 5, the second section (18) and the fourth section (19) featuring a substantially identical curvature.

7. Utilization according to one of the claims 5 and 6, the first section (16) and the third section (17) featuring a substantially identical curvature.

8. Utilization according to one of the claims 3 to 7, a surface of the first fold flank (15a) and a surface of the adjacent second fold flank (15b) being substantially parallel with respect to a radially outside lying fold edge (15c).

9. Utilization according to one of the claims 3 to 8, the filter element (1) featuring a support frame (40) with regular recesses (43) along an oval circumference in a radial expansion direction for accommodating the fold edges (15c).

10. Utilization according to one of the claims 3 to 9, the filter element (1) featuring a glue thread bead (45) for stabilizing the distance.

11. Utilization according to claim 10, the glue thread bead (45) being adhesively applied to a girth area on radially outwardly directed fold edges (15c).

12. Utilization according to one of the claims 9 and 10, the glue thread bead being adhesively applied to an end edge of the filter folds (15) directed into the axial expansion direction (A).

13. Utilization according to one of the claims 3 to 12, a first sealing element (51) being provided at a first axial end (11) of the first filter bellows (10) for an infiltrated-air-tight separation of a clean gas side and a raw gas side, the sealing element (51) being designed for keeping the distance of the filter folds (15).

## Revendications

1. Procédé de fabrication d'un soufflet de pli ovale, ce procédé comprenant :
- le pliage (S10) d'une bande (9) de matériau filtrant évoluant dans un sens longitudinal (B) pour former des plis de filtre (15), le pliage s'opérant essentiellement en travers du sens longitudinal et les plis de filtre (15) présentant des sens de pliage alternants, de sorte que plusieurs plis de filtre (15) évoluant en travers et comportant des bords de plis (15c) se forment d'un premier côté, et que plusieurs plis de filtre (15) évoluant en travers et comportant des bords de plis (15c) se forment d'un deuxième côté,
- la fixation (S20) des bords de plis (15c) du premier côté à une distance (d) régulière les uns des autres,
- la courbure (S30) de la bande (9) autour d'un axe évoluant en travers du sens longitudinal d'un sens d'extension (A) axial, de sorte que les bords de plis (15c) fixés soient dirigés en sens radial vers l'extérieur,
- la liaison (S40) de deux bords (15e, 15f) opposés et évoluant en travers du sens longitudinal (B), de sorte à former, dans un plan essentiellement orthogonal par rapport au sens longitudinal (A) axial d'un sens d'extension radial, un contour circonférentiel ovale du soufflet de pli (10).

2. Procédé selon la revendication 1, le contour circonférentiel ovale présentant, dans un plan orthogonal par rapport au sens d'extension axial d'un sens d'extension radial, une première section (16) avec une première courbure et une deuxième section (18) contiguë avec une deuxième courbure,
la deuxième courbure étant moins prononcée que la première courbure, l'inclinaison des plis de filtre (15) selon une perpendiculaire (L) par rapport à l'évolution de la deuxième section (18) augmentant, dans la deuxième section (18), au moins sur des sections partielles, en direction d'une section (16, 17) contiguë.

3. Utilisation d'un procédé, selon l'une des revendications 1 ou 2, de fabrication d'un élément filtrant pour un filtre à air d'un moteur à combustion interne, l'élément filtrant (1) présentant :
un premier soufflet de filtre (10) ovale avec plusieurs plis de filtre (15) s'étendant essentiellement dans un sens d'extension (A) axial de l'élément filtrant et comprenant un premier flanc de pli (15a) et un deuxième flanc de pli (15b) qui se rejoignent respectivement à un bord de pli (15c),
le premier soufflet de filtre (10) présentant, dans un plan orthogonal par rapport au sens d'extension axial d'un sens d'extension radial, une première section (16) avec une première courbure et une deuxième section (18) contiguë avec une deuxième courbure,
la deuxième courbure étant moins prononcée que la première courbure,
l'inclinaison des plis de filtre (15) selon une perpendiculaire (L) par rapport à l'évolution de la deuxième section (18) augmentant, dans la deuxième section (18), au moins sur des sections partielles, en direction d'une section (16, 17) contiguë.

4. Utilisation selon la revendication 3, l'inclinaison des plis de filtre (15) selon une perpendiculaire (L) par rapport à l'évolution de la première section diminuant, dans la première section (16), au moins sur certaines sections partielles, en direction d'une section (18, 19) contiguë.

5. Utilisation selon l'une des revendications 3 et 4, le premier soufflet de filtre (10) présentant en outre une troisième section (17) avec une troisième courbure et une quatrième section (19) avec une quatrième courbure, la deuxième section (18) et la quatrième section (19) étant respectivement disposées entre la première section (16) et la troisième section de manière à ce que la première section (16), la deuxième section (18), la troisième section (17) et la quatrième section (19) forment un contour périphérique ovale fermé.

6. Utilisation selon la revendication 5, la deuxième section (18) et la quatrième section (19) présentant une courbure essentiellement identique.

7. Utilisation selon l'une des revendications 5 et 6, la première section (16) et la troisième section (17) présentant une courbure essentiellement identique.

8. Utilisation selon l'une des revendications 3 à 7, une surface du premier flanc de pli (15a) et une surface du deuxième flanc de pli (15b) contiguë étant essentiellement parallèles par rapport à un bord de pli (15c) externe en sens radial.

9. Utilisation selon l'une des revendications 3 à 8, l'élément filtrant (1) présentant une cage d'appui (40) avec des évidements (43) réguliers disposés le long d'un sens d'extension radial au périmètre ovale et destinés à réceptionner les bords de plis (15c).

10. Utilisation selon l'une des revendications 3 à 9, l'élément filtrant (1) présentant un cordon de fil de colle (45) destiné à stabiliser l'espace.

11. Utilisation selon la revendication 10, le cordon de fil de colle (45) adhérant, sur une surface latérale extérieure, sur des bords de plis (15c) dirigés vers l'extérieur en sens radial.

12. Utilisation selon l'une des revendications 9 et 10, le cordon de fil de colle adhérant sur un bord frontal des plis de filtre (15) orientée dans le sens d'extension axial (A).

13. Utilisation selon l'une des revendications 3 à 12, un premier élément d'étanchéité (51) étant prévu sur une première extrémité axiale (11) du premier soufflet de filtre (10) afin de séparer un côté de gaz pur d'un côté de gaz brut de manière étanche aux fuites d'air, l'élément d'étanchéité (51) étant conçu pour maintenir la distance des plis de filtre (15) constante.
